# EUROPÄISCHE PATENTSCHRIFT

(11) **EP 0 456 094 B1**
(45) Veröffentlichungstag und Bekanntmachung des Hinweises auf die Patenterteilung: **28.06.1995**
(21) Anmeldenummer: 91107035.7
(22) Anmeldetag: 30.04.1991
(51) Int. Cl.: G01M 3/16, B65D 90/50

(54) **Flachbodentank**
Flat-bottomed container
Réservoir à fond plat

(30) Priorität: 11.05.1990 DE 4015190
(43) Veröffentlichungstag der Anmeldung: 13.11.1991
(73) Patentinhaber: W.L. Gore & Associates GmbH, 85636 Putzbrunn (DE)
(72) Erfinder: Henneck, Klaus, W-8832 Weissenburg (DE); Baumgärtner, Hans, W-8505 Röthenbach/Pegniz (DE)
(74) Vertreter: Klunker . Schmitt-Nilson . Hirsch

(56) Entgegenhaltungen:
- EP-A- 0 251 045
- DE-A- 3 427 964
- DE-B- 1 084 092
- US-A- 4 270 049
- US-A- 4 404 516

## Beschreibung

Im Zuge der Notwendigkeit, die Umwelt in größtmöglichem Maße zu schützen, ist es erforderlich, Tanks, in denen wassergefährdende Stoffe, also beispielsweise Kohlenwasserstoff, gelagert werden, auf schleichende Leckagen zu überwachen. Bei Neuinstallationen sollten derartige Überwachungssysteme von vornherein vorgesehen werden, von entscheidender Bedeutung ist aber auch die Sanierung und Nachrüstung bestehender Tanklager mit entsprechenden Überwachungssystemen.

Es ist bereits bekannt, in bestehende Flachbodentanks Zwischenböden einzuschweißen und die dadurch entstehende Kammer zu evakuieren bzw. auf einem unter Atmosphärendruck liegenden Druck zu halten. Durch Überwachung der Druckdifferenz können auftretende Leckagen frühzeitig erkannt werden.

Die bekannte Lösung ist jedoch vergleichsweise sehr aufwendig, da der Innenboden als lasttragender Boden sehr stabil ausgeführt werden muß. Bei der Nachrüstung bestehender Flachbodentanks muß zunächst eine Bitumenschicht auf den Tankboden aufgebracht werden, sodann ein erster Blechboden eingeschweißt werden, an den sich ein Hohlraum anschließt, der von einem zweiten eingeschweißten Boden abgeschlossen wird. Die Einschweißung dieses dritten Bodens ist notwendig, da der primäre Tankboden wegen einer Korrosionsgefahr von außen nicht verwendet werden kann. Dieses Verfahren ist sehr kostenintensiv und mit einem hohen technischen Aufwand verbunden. Zudem läßt sich nicht feststellen, wo die Leckage auftritt.

Es ist weiterhin ein Verfahren zur Lecküberwachung von Flachbodentanks bekannt, bei welchem ein Sensorschlauch flächig in Relation zu dem Tankboden verlegt wird. Der Sensorschlauch wird in einem perforierten Schutzrohr verlegt und besteht aus einem gasdurchlässigen Material. Durch den Schlauch werden in bestimmten zeitlichen Abständen, z.B. 24 Stunden, Gasproben abgezogen und analysiert. Dies bedeutet jedoch, daß sich der Zeitpunkt der Leckage nicht feststellen läßt und somit kein sofortiger Alarm gegeben wird. Die vorgenommenen Gasanalysen sind apparativ aufwendig, teuer und eventuell unzuverlässig, da die Gasproben gegebenenfalls über eine längere Strecke hinweg transportiert werden müssen und sich dabei in ihrer Zusammensetzung verändern können.

Der Erfindung liegt die Aufgabe zugrunde, einen Flachbodentank zu schaffen, mit dem bestehende Flachbodentanks ohne größeren Aufwand nachgerüstet werden können, der zuverlässig arbeitet, mit dem auftretende Leckagen schnellstens lokalisierbar sind und der hinsichtlich des angewendeten Meßverfahrens möglichst einfach ist.

Erfindungsgemäß wird diese Aufgabe durch die im Anspruch 1 angegebenen Merkmale gelöst.

Kern der Erfindung ist die Verlegung eines an sich bekannten Sensorkabels innerhalb einer flüssigkeitsdurchlässigen Ausgleichsschicht, die nach außen durch eine für das Leckmedium undurchlässige Sperrschicht abgegrenzt ist. Die Sperrschicht wirkt bei dieser Verlegungsart wie eine Art Sammelbecken, so daß auch schleichende Leckagen durch den Konzentrationseffekt der Sperrschicht zuverlässig detektierbar sind.

Vorteilhafte Weiterbildungen der Erfindung sind in den Unteransprüchen angegeben.

Auch existierende Flachbodentanks können mit dem erfindungsgemäßen Verfahren nachgerüstet werden, indem entweder im Inneren der Flachbodentanks der entsprechende Schichtaufbau eingebracht und sodann ein Innenboden eingeschweißt wird oder aber indem die Flachbodentanks angehoben werden und unter den Flachbodentanks der entsprechende Schichtaufbau vorgenommen wird.

Allen Erfindungsvarianten gemeinsam ist das eigentliche Lösungsprinzip, das auf der Verlegung eines an sich bekannten Sensorkabels in einer flüssigkeitsdurchlässigen Ausgleichsschicht besteht.

Das erfindungsgemäß verwendete Sensorkabel ist ein Kabel, dessen elektrische Eigenschaften sich bei Kontakt mit dem Leckmedium ändern. Die Änderung der elektrischen Eigenschaften wird durch entsprechende Meßgeräte angezeigt. Beispielsweise handelt es sich um ein Koaxialkabel, das mit einer Isolierung aus mikroporösem, gerecktem PTFE umgeben ist, die zwar flüssige Kohlenwasserstoffe wegen ihrer geringen Viskosität passieren läßt, für Wasser jedoch undurchlässig ist. Sensorkabel der hier in Rede stehenden Art werden beispielsweise von der Firma W.L. Gore & Associates GmbH, Putzbrunn, unter der Bezeichnung DGD020 und dem Warenzeichen LEAKLEARN vertrieben. Aufbau und Funktion eines Sensorkabels sind in der US-Patentschrift 4 206 632 beschrieben, auf deren Offenbarungsgehalt ausdrücklich Bezug genommen wird.

Das Meßprinzip beruht auf dem Effekt, daß in einer homogenen Leitung, die mit einem Wellenwiderstand abgeschlossen ist, praktisch keine Reflektionen auftreten, wenn ein Spannungsimpuls angelegt wird. Der Wellenwiderstand hängt u.a. von der Geometrie und der Dielektrizitätskonstante des Isoliermaterials ab. Dringen in das poröse Isoliermaterial Flüssigkeiten ein, verändern diese die Dielektrizitätskonstante der Isolation und damit den Wellenwiderstand des Sensorkabels an der Benetzungsstelle. Dadurch wird das Kabel inhomogen und der gesendete Impuls wird reflektiert. Aus der Laufzeit zwischen gesendetem und reflektiertem Impuls kann man die Entfernung der Benetzungsstelle vom Anzeigegerät bestimmen. Nach dem gleichen Meßverfahren kann man einen Kabelkurzschluß oder eine Kabelunterbrechung feststellen und lokalisieren. Sinkt der Wellenwiderstand des Kabels an einer Stelle, meldet das Gerät Alarm und gibt gleichzeitig die Entfernung der Benetzungsstelle an. Bei Kabelbruch oder Kurzschluß erfolgt eine Störmeldung, wobei gleichzeitig die Entfernung der Störstelle auf einem Display angegeben wird.

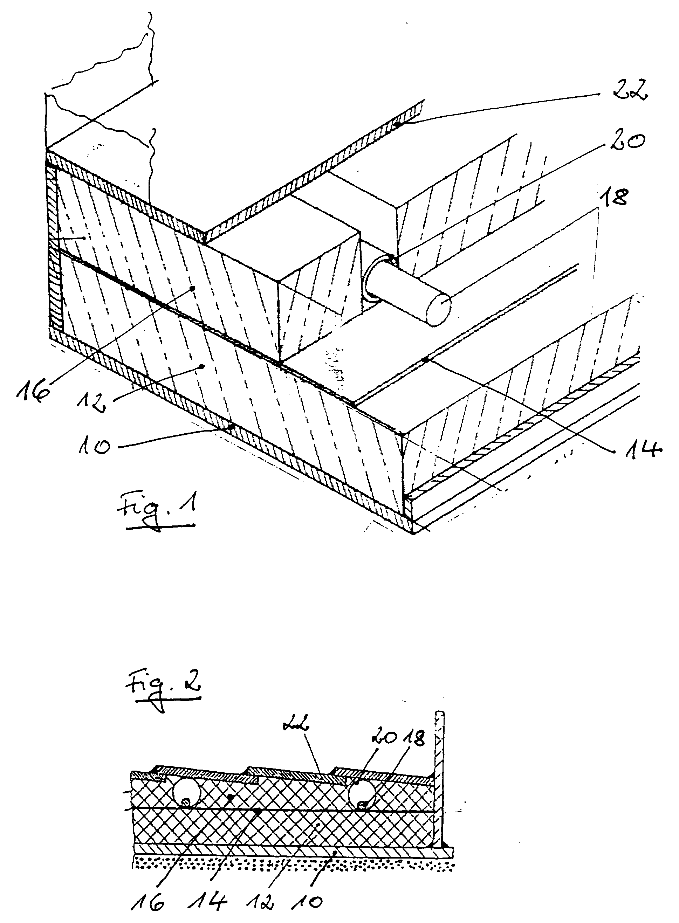

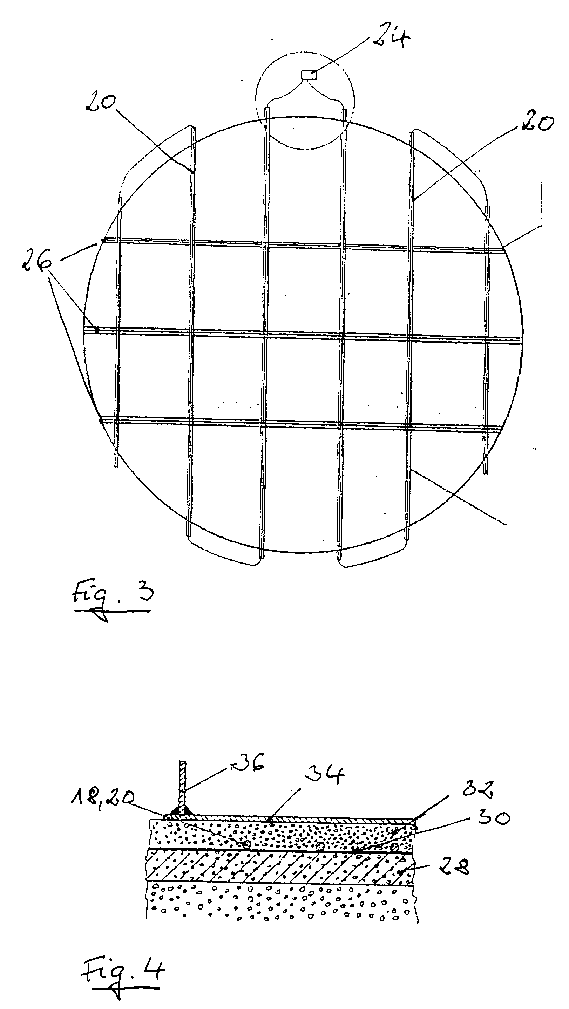

Nachfolgend sind Ausführungsbeispiele der Erfindung anhand der beigefügten Zeichnung beschrieben, wobei die "Figuren 3,4" nicht beansprucht sind. Darin zeigen
Fig. 1 die schematische Darstellung des Schichtaufbaus im Doppelboden eines Flachbodentanks;
Fig. 2 den schematischen Querschnitt durch den Doppelboden eines Flachbodentanks mit einem segmentierten Zwischenboden;
Fig. 3 die flächige Verlegung des Sensorkabels im Fundament eines runden Flachbodentanks; und
Fig. 4 die schematische Darstellung eines auf einem Fundament mit eingelegten Sensorkabeln ruhenden Flachbodentanks.

Mit Bezugnahme auf Fig. 1 wird zunächst der Schichtaufbau in einem Flachbodentank beschrieben. Auf dem äußeren Tankboden 10 wird zunächst eine erste Bitumenschicht (Spezialasphalt) 12 aufgebracht. Auf dieser Schicht wird entweder eine für das Leckmedium undurchlässige Folie oder aber ein Anstrich 14 aufgebracht, der in der Lage ist, das Leckmedium wenigstens zeitweise zurückzuhalten. Als Versiegelung hat sich beispielsweise ein Zwei-Komponenten-Epoxyd bewährt. Als Folie wird vorzugsweise Polyäthylen eingesetzt.

Bei der Nachrüstung von Flachbodentanks hat sich statt der Verlegung einer Folie die Anbringung einer Versiegelung bzw. eines Sperranstriches bewährt.

Auf die Sperrschicht 14 wird eine flüssigkeitsdurchlässige Schicht 16 aufgebracht. Diese Schicht besteht vorzugsweise aus Drainageasphalt, in bestimmten Fällen kann aber auch Kies verwendet werden, es kommt lediglich darauf an, daß die Schicht im Leckagefall austretendes Leckmedium zum Sensorkabel transportiert.

Das Sensorkabel 18 ist in einem perforierten Schutzrohr 20 angeordnet, das in Nuten oder Kanälen liegt, die in der Ausgleichsschicht 16 ausgebildet sind. Diese Kanäle können beispielsweise mit Holzstücken erzeugt werden, die später entfernt werden.

Auf der Ausgleichsschicht 16 wird der innere Tankboden 22 eingeschweißt.

Der in Fig. 1 dargestellte Schichtaufbau kann auch in bestehende Flachbodentanks eingebracht werden. Der Zwischenboden 22 wird überlappend in Form von Bahnen eingeschweißt, wie dies in Fig. 2 angedeutet ist.

Fig. 3 zeigt ein Verlegeschema des Sensorkabels im Fundament eines runden Flachbodentanks. Das Sensorkabel ist mäanderförmig verlegt und führt zu einem Meßgerät 24. Selbstverständlich kann das Kabel auch in engeren oder weiteren Schleifen verlegt werden, oder aber auch ringförmig.

Vorzugsweise werden in der Ausgleichsschicht Zuführkanäle 26 ausgebildet, durch die durch den Zwischenboden eingedrungenes Leckmedium den Drainagerohren bzw. dem Sensorkabel zugeführt wird.

Fig. 4 zeigt den Querschnitt durch einen Schichtaufbau, wie er unterhalb eines Flachbodentanks ausgebildet ist.

Auf das Tankfundament wird zunächst eine Sand- oder Spezialasphaltschicht 28 aufgebracht. Auf diese Asphaltschicht 28 wird dann eine für das Leckmedium undurchlässige Folie 30 aufgelegt, die ein Eindringen von Leckflüssigkeit in das umgebende Erdreich verhindert und die einen Sammeleffekt bewirkt. Auf der Folie 30 sind die Drainagerohre 20 mit den innen liegenden Sensorkabeln 18 verlegt. Die Drainagerohre liegen in vorgeformten Kanälen in der flüssigkeitsdurchlässigen Ausgleichsschicht 32. Diese Schicht kann beispielsweise aus Drainageasphalt oder Kies bestehen. Bei den Sensorkabeln handelt es sich wiederum um die bekannten Kabel, deren elektrische Eigenschaften sich bei Kontakt mit der Leckflüssigkeit verändern. Sie werden von der Firma W.L. Gore & Associates GmbH, Putzbrunn, unter dem Warenzeichen LEAKLEARN und der Typbezeichnung DGD020 vertrieben. Aufbau und Funktion eines Kabels sind in der US-Patentschrift 4 206 632 beschrieben.

Auf der Ausgleichsschicht 32 ruht der Tank mit Tankboden 34 und Tankwänden 36. Die Folie 30 wird seitlich hochgezogen und an den Tankwänden oder ähnlichem befestigt. Sie fungiert als Auffangwanne.

Bei einer Nachrüstung eines bereits installierten Flachbodentanks wird dieser aus dem Erdreich herausgehoben, gereinigt und sandgestrahlt. Auf das vorhandene Tankfundament wird die Ausgleichsschicht 28 und sodann die Folie 30 aus beispielsweise Polyäthylen aufgebracht. Auf der Folie werden die Drainagerohre 20 mit dem darin liegenden Sensorkabel 18 verlegt, die Zwischenschicht 32 wird aufgebracht. Nach Verfestigung der Ausgleichsschicht 32 wird der Flachbodentank wieder auf das modifizierte Fundament zurückgesetzt.

Modifikationen des beschriebenen Verfahrens sind selbstverständlich möglich, so müssen die Sensorkabel 18 nicht unbedingt direkt auf der Sperrfolie oder Sperrschicht 30, 14 aufliegen, sie können auch direkt am Tankboden anliegen. In diesem Fall werden sie auf Leckagen eher ansprechen, allerdings entfällt der Konzentrations- und Sammlereffekt der Sperrschicht, so daß eine engmaschigere Verlegung des Kabels erforderlich ist.

## Patentansprüche

1. Flachbodentank mit einem ersten äußeren Tankboden (10) und einem zweiten inneren Tankboden (22), gekennzeichnet durch folgenden Schichtaufbau, in der von den beiden Tankböden gebildeten Kammer
(a) eine erste Bitumenschicht (12), die mit dem äußeren Tankboden (10) benachbart ist,
(b) eine Sperrfolie oder ein das Leckmedium zurückhaltender Anstrich (14) auf der ersten Schicht (12),
(c) eine zweite flüssigkeitsdurchlässige Ausgleichsschicht (16) auf der Sperrfolie oder dem Anstrich (14), aus vorzugsweise porösem Bitumen, in welcher ein an sich bekanntes Sensorkabel (18) flächig verlegt ist, dessen elektrische Eigenschaften sich bei Kontakt mit dem Leckmedium meßbar ändern.

2. Flachbodentank nach Anspruch 1, dadurch gekennzeichnet, daß in der Ausgleichsschicht 16 Nuten oder Kanäle eingeformt sind, in welchen das Sensorkabel 18 verlegt ist.

3. Flachbodentank nach Anspruch 1 oder 2, dadurch gekennzeichnet, daß das Sensorkabel 18 in stabilen, perforierten Schutzrohren 20 verlegt ist.

4. Flachbodentank nach einem der Ansprüche 1 bis 3, dadurch gekennzeichnet, daß in der Ausgleichsschicht 16 Zuführkanäle eingeformt sind, durch welche Leckmedium dem Sensorkabel 18 zugeführt wird.

5. Flachbodentank nach einem der Ansprüche 1 bis 4, dadurch gekennzeichnet, daß das Sensorkabel 18 unmittelbar auf der für das Leckmedium undurchlässigen Sperrfolie oder der das Leckmedium zurückhaltenden Sperrschicht 14 verlegt ist.

6. Flachbodentank nach einem der Ansprüche 1 bis 5, dadurch gekennzeichnet, daß der innere Tankboden 22 aus einzelnen Bahnen besteht, die überlappend verschweißt sind.

## Claims

1. A flat-bottom tank having a first outer tank bottom (10) and a second inner tank bottom (22), characterized by the following layer structure in the chamber formed bv the two tank bottoms:
(a) a first bitumen layer (12) adjacent the outer tank bottom (10),
(b) a sealing foil or a coat of paint (14) retaining the leaking medium on the first layer (12),
(c) a second liquid-permeable leveling layer (16) on the sealing foil or the coat of paint (14) consisting preferably of porous bitumen, in which a basically known sensor cable (18) is laid flat whose electric properties change measurably upon contact with the leaking medium.

2. The flat-bottom tank of claim 1, characterized in that grooves or channels in which the sensor cable (18) is laid are formed in the leveling layer (16).

3. The flat-bottom tank of claim 1 or 2, characterized in that the sensor cable (18) is laid within stable, perforated protecting tubes (20).

4. The flat-bottom tank of any of claims 1 to 3, characterized in that feed channels through which leaking medium is fed to the sensor cable (18) are formed in the leveling layer (16).

5. The flat-bottom tank of any of claims 1 to 4, characterized in that the sensor cable (18) is laid directly on the sealing foil impermeable to the leaking medium or the sealing layer (14) retaining the leaking medium.

6. The flat-bottom tank of any of claims 1 to 5, characterized in that the inner tank bottom (22) consists of individual sheets welded in overlapping fashion.

## Revendications

1. Réservoir à fond plat comprenant un premier fond extérieur (10) de réservoir et un deuxième fond intérieur (22) de réservoir, caractérisé par la construction stratifiée suivante dans la chambre formée par les deux fonds du réservoir
(a) une première couche de bitume (12) qui est adjacente au fond extérieur (10) du réservoir,
(b) une feuille d'arrêt ou un enduit (14) qui retient le milieu de fuite sur la première couche (12),
(c) une deuxième couche de nivellement (16) perméable aux liquides sur la feuille d'arrêt ou sur l'enduit (14), faite de bitume de préférence poreux, et dans laquelle est posé à plat un câble capteur (18) connu en soi dont les propriétés électriques varient de façon mesurable en réponse à un contact avec le milieu de fuite.

2. Réservoir à fond plat selon la revendication 1, caractérisé en ce que, dans la couche de nivellement (16), sont formés des rainures ou canaux dans lesquels le câble capteur (18) est posé.

3. Réservoir à fond plat selon la revendication 1 ou 2, caractérisé en ce que le câble capteur (18) est posé dans des tubes protecteurs solides, perforés (20).

4. Réservoir à fond plat selon une des revendications 1 à 3, caractérisé en ce que, dans la couche de nivellement (16) sont formés des canaux d'amenée à travers lesquels le milieu de fuite est conduit au câble capteur (18).

5. Réservoir à fond plat selon une des revendications 1 à 4, caractérisé en ce que le câble capteur (18) est posé directement sur la feuille d'arrêt imperméable au milieu de fuite ou sur la couche d'arrêt (14) qui retient le milieu de fuite.

6. Réservoir à fond plat selon une des revendications 1 à 5, caractérisé en ce que le fond intérieur (22) du réservoir est composé de bandes distinctes qui sont soudées à recouvrement.
